# EUROPEAN PATENT APPLICATION

(11) **EP 3 096 024 A1**
(43) Date of publication of application: **23.11.2016**
(21) Application number: 15174293.9
(22) Date of filing: 29.06.2015
(51) Int. Cl.: F16B 21/04

(54) **A FASTENER AND DOUBLE END ZIPPER WITH THE FASTENER**

(30) Priority: 18.05.2015 CN 201510254266
(71) Applicant: Zhongshan Sirui Photographic Equipment Industry Co., Ltd., The Third Industrial District Wuguishan Town Zhongshan Guangdong 528458 (CN)
(72) Inventor: CHUAN, Tan Yi, 440019 Singapore (SG)
(74) Representative: Lavoix

(57) **Abstract**

The present invention relates to a fastener, the convex member of the male fastener comprises a convex member body and a convex portion, and the convex member is adapted for contracting along the radial direction, as the convex portion is squeezed radially; the female fastener comprises a female fastener body and a receiving cavity formed on the female fastener body, the receiving cavity comprises a first slot and a second slot, a locking slot is formed on an inner wall of the first slot, for preventing the convex portion from separating from the female fastener axially, and a constraint guide slot is provided between the locking slot and the second slot, the convex portion is adapted for move along the constraint guide slot and between the second slot and the locking slot in a reciprocating manner, as the convex member rotates relative to the receiving cavity in a reciprocating manner, and the constraint guide slot has a shape that allows the convex member to be squeezed radially by the constraint guide slot, during the rotation process of the convex member from the second slot to the locking slot. The fastener in the present invention has a simple structure, it is reliable and easy to operate, when the fastener is used on the zipper on a luggage or a bag, it can prevent the luggage or the bag from being opened by a thief without drawing the attention of the carrier.

## Description

### Technical Field

The present invention relates to the technical field of the fastener, especially relates to a fastener for luggage and bags.

### Background of Invention

People always carry luggage or bags for placing their belongings, and the luggage and bags in the prior arts are generally opened and closed by a zipper, which causes a problem that the luggage or the bags can be opened by a thief without drawing the attention of the carrier. In order to solve the problem, Chinese patent literature under No. CN103653566 discloses a zipper fastener, comprising two pullers for connecting elongated chain, each puller is provided with a pull tab, in order to improve the safety of the zipper fastener, the pull tabs are locked with each other by sliding and rotating action, so that one pull tab is adapted for rotating around the chain extension axis on the vertical direction relative to another pull tab.

The zipper fastener of the above patent is locked by locking the convex portion on the first pull tab and the slot on the second pull tab, therefore, the locking connection is unreliable, it usually needs to provided with a padlock, which passes through the holes on the first pull tab and the second pull tab to lock the first pull tab and the second pull tab, thus, it is inconvenient to use. Besides, a sling needs to be provided specifically on the luggage or the bag to hang them on a rod, and the sling is in the shape of a ring, which is only suitable for hanging on a hook or a rob with one end closed and the other free, and it can not hanging on the rob with both ends connected to a wall or other object conveniently.

### Summary of the Invention

The technical problem to be solved by this invention is that the structure of the fastener in the prior art is unreasonable, which leads to an unreliable connection and is easy to open, so that the invention is to provide a fastener which is reliable and convenient to use, and a double end zipper with the fastener.

The fastener of the present invention, comprises a male fastener; and a female fastener, the male fastener comprises a convex member, the convex member comprises a convex member body, and a convex portion, provided on a lateral wall of the convex member body; the convex member is adapted for contracting along the radial direction, as the convex portion is squeezed radially; the female fastener comprises a female fastener body, an receiving cavity formed on the female fastener body, adapted for insertion of the convex member; the receiving cavity comprises a first slot, adapted for axial insertion of the convex member body, and a second slot, adapted for axial insertion of the convex portion, a locking slot is formed on an inner wall of the first slot, for preventing the convex portion from separating from the female fastener axially, and a constraint guide slot is provided between the locking slot and the second slot, the convex portion is adapted for move along the constraint guide slot and between the second slot and the locking slot in a reciprocating manner, as the convex member rotates relative to the receiving cavity in a reciprocating manner, and the constraint guide slot has a shape that allows the convex member to be squeezed radially by the constraint guide slot, during the rotation process of the convex member from the second slot to the locking slot.

In a class of embodiment of the present invention, the convex member body is an elastic circular column, a third slot for dividing the circular column into at least two individual parts is provided on an end face of the circular column, and a bottom of the third slot extends towards a root portion of the convex member body on which the circular column is provided, an outer side wall of each the individual part is correspondingly provided with the convex portion; the inner wall of the first slot is formed with a plurality of the locking slots at corresponding positions, with the number of the locking slots in consistence with that of the convex portion, and the rotation angle of each convex portion from the corresponding second slot to the corresponding locking slot is the same.

In a class of embodiment of the present invention, each individual part has one convex portion provided on a lateral wall thereof, two second slots are provided on corresponding positions of the receiving cavity and two locking slot are provided on the corresponding position of the inner side wall of the first slot.

In a class of embodiment of the present invention, two convex portions are provided on the lateral walls of two individual parts, and two convex portions on the same individual part are aligned along the axial direction, two second slots are provided on corresponding positions of the receiving cavity and two convex portions on the same individual part are adapted for a coaxial insertion into the same the second slot, and the first slot has four the locking slots provided on corresponding positions of an inner side wall thereof.

In a class of embodiment of the present invention, the rotation angle of each convex portion from the corresponding second slot to the corresponding locking slot is 90°.

In a class of embodiment of the present invention, the convex portion is an arc projection, and the length of the arc projection extends along the circumferential direction of the convex member body.

In a class of embodiment of the present invention, as the constraint guide slot squeezes the convex portion radially through the lateral wall thereof, a sliding track is formed on the lateral wall of the constraint guide slot. The constraint guide slot has a shape that allows the distance from the sliding track to the rotation center gradually reduces along the direction from the end where the second slot is located to the end where the locking slot is located.

In a class of embodiment of the present invention, the male fastener further comprises a male fastener body, the convex member is provided on the male fastener body, and the shape of the male fastener body is the same as that of the female fastener body.

In a class of embodiment of the present invention, the male fastener and the female fastener respectively have a flexible connection member connected thereto.

In a class of embodiment of the present invention, the flexible connection member is a rope or a chain.

Another objective of this invention is to provide a double end zipper, comprising, a chain teeth and two sliding zipper heads coordinating with the chain teeth, and further comprising, the above mentioned fastener, the flexible connection member of the male fastener and the flexible connection member of the female fastener are respectively connected with two sliding zipper heads.

Comparing with the prior art, the above technical solutions of the present invention have the following advantages:
1. In the present invention, by inserting convex member on the male fastener into the receiving cavity on the female fastener, and during the rotation process of the convex member, since the convex portion is guided and squeezed radially by the constraint guide slot, the convex member can rotated smoothly in the direction of the locking slot. After reaching the locking slot, the radial extrusion pressure on the convex member from the constraint guide slot is removed, thus, after the convex portion enters the locking slot, the convex member is released in the locking slot and recovers to the initial state. The fastener can be unlocked only by rotating the male fastener in a reverse direction. Thus, the above structure of the fastener is not only easy to use, but also reliable, and has a high usability.
2. When the fastener of the present invention using on the zipper on a luggage or a bag, after the zipper is closed, it can prevent the luggage or the bag from being opened by a thief without drawing the attention of the carrier by inserting and rotating the fastener to be locked. Besides, since the fastener is provided with a rope, and the fastener itself is convenient to open and lock, thus the fastener is suitable for being used as a pendant, which not only can hang on a hook, but also can hang on a rod with both ends closed, such as a rod with the both ends fixed on a wall.

### Brief Description of the Drawings

In order to make the invention easier to be clearly understood, the invention will be described in greater detail with references to the embodiments and the appended drawings, wherein:
FIG. 1 is a stereogram view of the female fastener of embodiment 1 of the present invention;
FIG. 2 is a stereogram view of the male fastener of embodiment 1 of the present invention;
FIG. 3 is a stereogram view of the male fastener, which is inserted into the female fastener of embodiment 1 of the present invention;
FIG. 4 is a stereogram view of the male fastener in FIG. 3, which rotates 90°clockwise and is locked with the female fastener;
FIG. 5 is a stereogram view of the male fastener in FIG. 3, which rotates 90°counterclockwise and is locked with the female fastener;
FIG. 6 is a stereogram view of the female fastener of embodiment 2 of the present invention;
FIG. 7 is a stereogram view of the male fastener of embodiment 2 of the present invention;
FIG.8 is a stereogram view of the male fastener inserting into the female fastener of embodiment 2 of the present invention;
FIG.9 is a stereogram view of the male fastener in FIG. 8, which rotates 90°clockwise and is locked with the female fastener;
FIG.10 is a stereogram view of the male fastener in FIG. 8, which rotates 90°counterclockwise and is locked with the female fastener;
Wherein,
A-male fastener; A1-male fastener body; A2-convex member body; A3- convex portion; A4- third slot; B- female fastener; B1- female fastener body; B2-first slot; B3-second slot; B4- locking slot; B5-constraint guide slot; C-flexible connection member.

### Detailed Description of the Preferred Embodiments

The present invention will be described in greater detail with references to the appended drawings.

### Embodiment 1

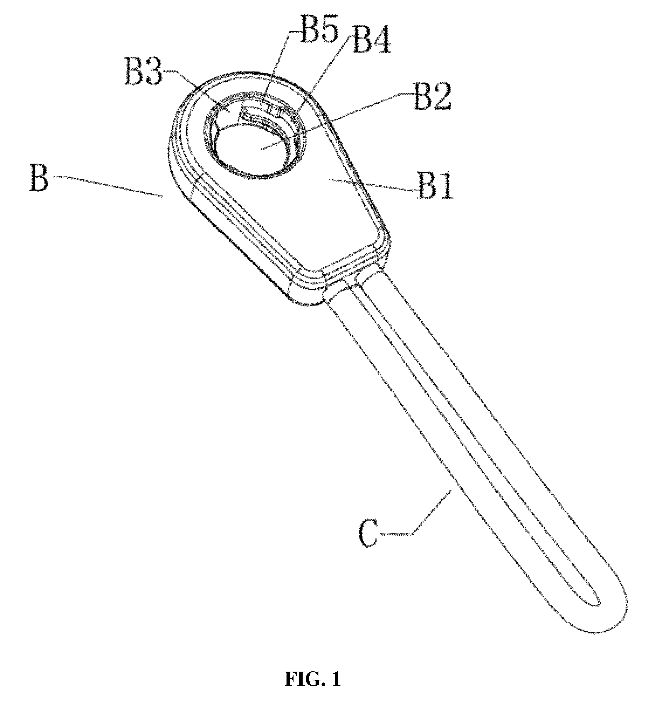

As shown in FIG. 1-5, the fastener of embodiment 1 comprises a male fastener A and a female fastener B.

The male fastener A comprises a male fastener body Aland a convex member provided on the male fastener body A1, the convex member comprises a convex member body A2, and a convex portion A3, provided on a lateral wall of the convex member body A2, the convex member is adapted for contracting along the radial direction, as the convex portion A3 is squeezed radially, to achieve the contraction of the convex member along the radial direction, and the convex member body A2 is adapted for contracting along the radial direction by squeezing the convex portion. Of course, the convex portion A3 can be provided elastically on the convex member, the convex portion A3 is adapted for contracting inside the convex member body A2 by squeezing the convex portion A3. In the present embodiment, preferably, the convex member body A2 is adapted for contracting along the radial direction when it is squeezed radially.

The female fastener B comprises a female fastener body B1, an receiving cavity formed on the female fastener body B1, adapted for insertion of the convex member; the receiving cavity comprises a first slot B2, adapted for axial insertion of the convex member body A2, and a second slot B3, adapted for axial insertion of the convex portion A3, a locking slot B4 is formed on an inner wall of the first slot B2, for preventing the convex portion A3 from separating from the female fastener axially, and a constraint guide slot B5 is provided between the locking slot B4 and the second slot, the convex portion A3 is adapted for move along the constraint guide slot B5 and between the second slot B3 and the locking slot B4 in a reciprocating manner, as the convex member rotates relative to the receiving cavity in a reciprocating manner, and the constraint guide slot has a shape that allows the convex member to be squeezed radially by the constraint guide slot B5, during the rotation process of the convex memberA3 from the second slot B3 to the locking slot B4.

According to the above solution, by inserting convex member on the male fastener A into the receiving cavity on the female fastener B, and during the rotation process of the convex member, since the convex portion A3 is guided and squeezed radially by the constraint guide slot B5, the convex member can rotated smoothly in the direction of the locking slot B4. After reaching the locking slot, the radial extrusion pressure on the convex member from the constraint guide slot B5 is removed, thus, after the convex portion A3 enters the locking slot B4, the convex member is released in the locking slot B4 and recovers to the initial state. The fastener can be unlocked only by rotating the male fastener A in a reverse direction. Thus, the above structure of the fastener is not only easy to use, but also reliable, and has a high usability.

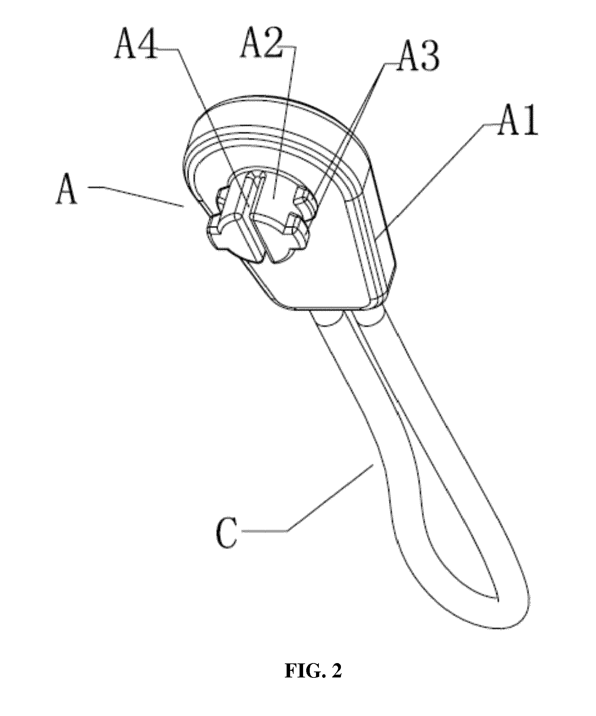

There are multiple structures which can achieve the radial extrusion of the convex member body A2 after being squeezed, as shown in FIG. 1 and Fig. 2, in the present embodiment, preferably, the convex member body A2 is an elastic circular column, a third slot A4 for dividing the circular column into at least two individual parts is provided on an end face of the circular column, and a bottom of the third slot A4 extends towards a root portion of the convex member body A2 on which the circular column is provided, two convex portions A3 are provided on the lateral walls of two individual parts portion A3, and the two convex portions A3 on the same individual part are aligned along the axial direction, two second slots B3 are provided on corresponding positions of the receiving cavity and two convex portions A3 on the same individual part are adapted for a coaxial insertion into the same the second slot B3, and the first slot B2 has four the locking slots B4 provided on corresponding positions of an inner side wall thereof. And the rotation angle of each convex portion A3 from the corresponding second slot B3 to the corresponding locking slot B4 is the same.

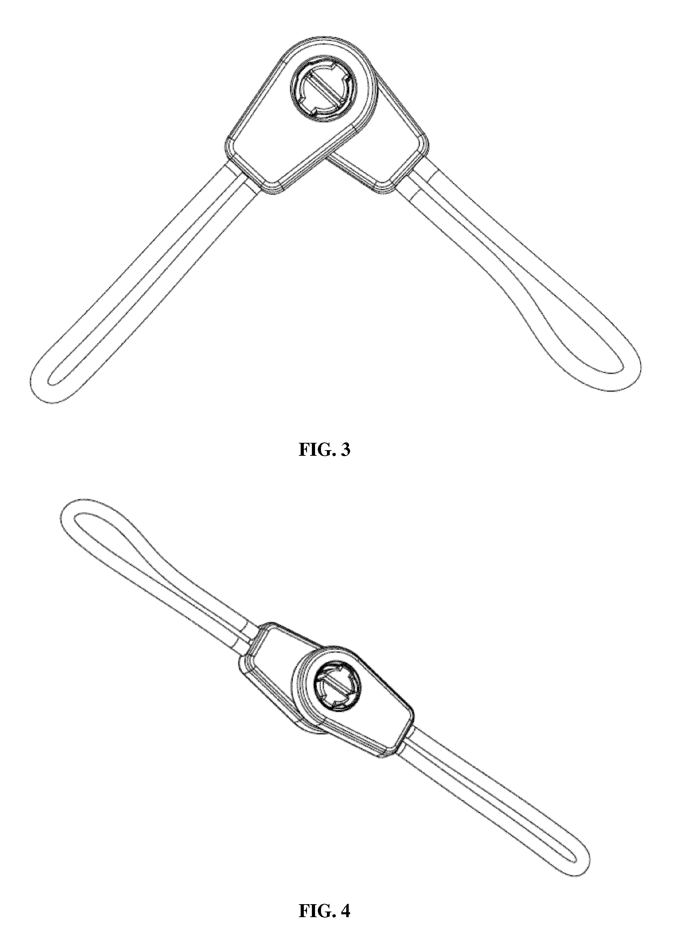

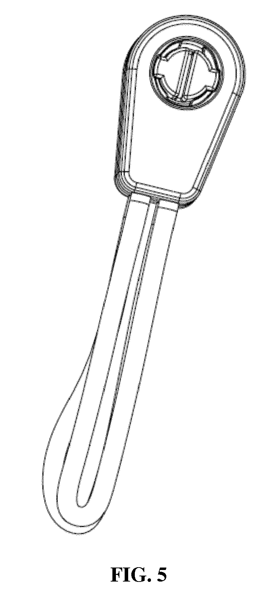

Furthermore, preferably, the rotation angle of each convex portion A3 from the second slot B3 to the locking slot B4 is 90°. Thus, the constraint guide slot can be provided between the second slot B3 and the locking slot B4 on the left or right side of the second slot B3, or the constraint guide slot can be provided between the second slot B3 and the locking slot B4 on the left and right side of the second slot B3. The latter configuration allows a higher flexibility of rotation and is more convenient to use, without increasing the number of the locking slots B4. FIG. 4 and FIG.5 show two locking states of fastener of FIG. 3 rotating in two reverse directions.

In order to make the locking structure more reliable, and has a better operation feeling, in the present embodiment, preferably, the convex portion A3 is an arc projection, and the length of the arc projection extends along the circumferential direction of the convex member body A2.

As the constraint guide slot B5 squeezes the convex portion radially through the lateral wall thereof, a sliding track is formed on the lateral wall of the constraint guide slot B5. The constraint guide slot B5 has a shape that allows the distance from the sliding track to the rotation center gradually reduces along the direction from the end where the second slot is located to the end where the locking slot is located. This kind of incremental constraint guide slot B5 can provide a high usability.

Preferably, the shape of the male fastener body A1 is the same as that of the female fastener body B1. Thus, when the male fastener body A1 locking with the female fastener body B1, the two bodies constitute a whole, which is artistic.

The male fastener A and the female fastener B respectively have a flexible connection member C connected thereto. The fastener can be used on other object conveniently by the flexible connection member C. The flexible connection member C is a rope or a chain.

### Embodiment 2

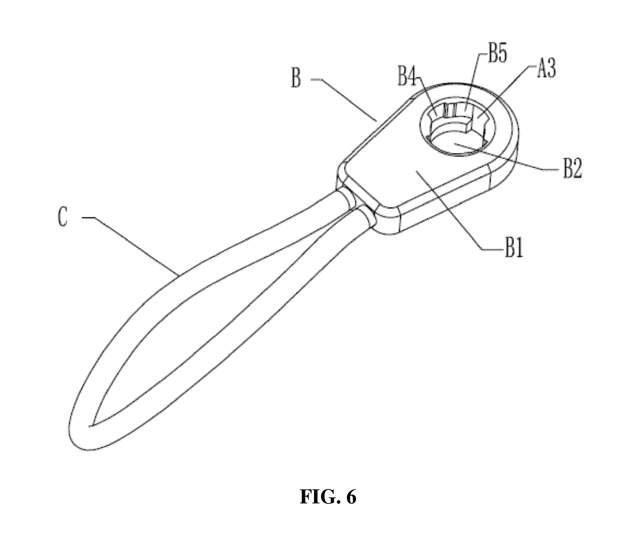

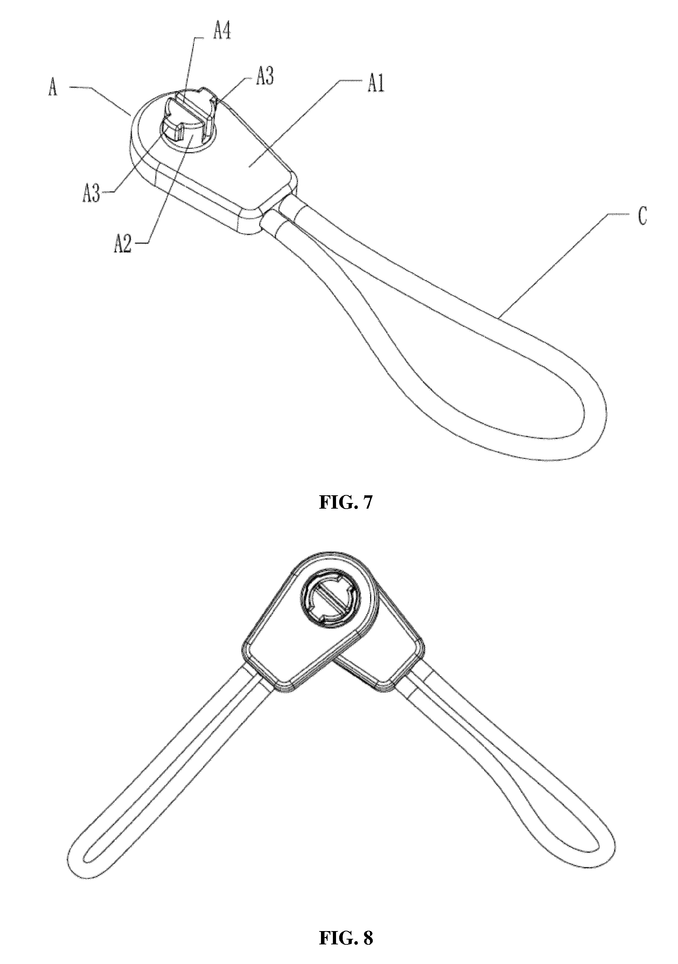

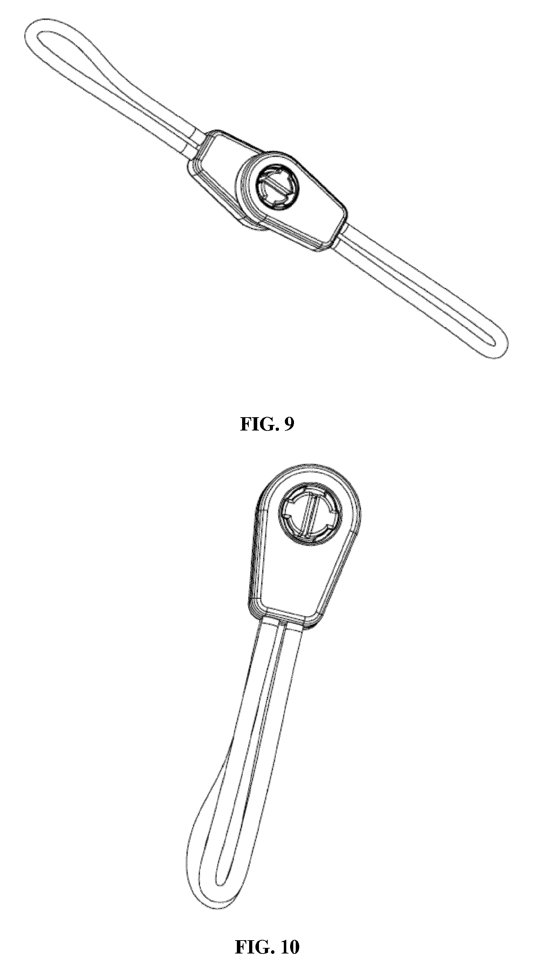

As shown in FIG. 6-10, the differences between embodiment2 and embodiment 1 is that, a third slot A4 for dividing the circular column into at least two individual parts is provided on an end face of the circular column, each individual part has one convex portion A3 provided on a lateral wall thereof, two second slots B3 are provided on corresponding positions of the receiving cavity and two locking slots B4 are provided on the corresponding positions of the inner side wall of the first slot B2.

The double end zipper of the present invention comprises a chain teeth, and two sliding zipper heads coordinating with the chain teeth, and further comprises a fastener of any of the above embodiments, the flexible connection member C of the male fastener A and the flexible connection member C of the female fastener B are respectively connected with two sliding zipper heads. In this way, after the zipper is closed, it can prevent the luggage or the bag from being opened by a thief without drawing the attention of the carrier by inserting and rotating the fastener to a locking state. Besides, since the fastener is provided with a rope, and the fastener itself is convenient to open and lock, thus the fastener is suitable for being used as a pendant, which not only can hang on a hook, but also can hang on a rod with the both ends closed, such as a rod with both ends fixed on a wall.

The process of operating the fastener of the present invention is described in detail as bellow.

As shown in FIG. 3, the convex member of the male fastener A is inserted into the receiving cavity of the female fastener, the male fastener is rotated, which allows the arc projection on the male fastener A to slide along the constraint guide slot B5 from the second slot B3 to the locking slot B4, since the convex member body A2 has a special structure and the material thereof is elastic, the arc projection contracts along the radial direction, as the arc projection is squeezed radially by the constraint guide slot B5, after the arc projection reaches the locking slot B4, the convex member body is released to expand, thus, the arc projection is locked in the locking slot B4;

The fastener can be unlocked only by rotating it in a reverse direction, thus the convex member body contracts along the radial direction, so that the arc projection can be rotated into the constraint guide slot B5 from the locking slot B4, and can further slide into the second slot B3, then the male fastener and the female fastener are separated, which is convenient to operate.

Obviously, the above mentioned embodiments are for clearly explaining the present invention, which do not constitute undue limitation of the present invention. It is obviously to the skilled person in the art that, various modifications could be derived without departing from the spirits and the effects of the invention. And there is no need to describe all the embodiments Therefore, the modifications or alternations derived thereof are still included in the protection scope of the present invention.

## Claims

1. A fastener, comprising
a male fastener; and
a female fastener,
**characterized in that**
said male fastener comprises a convex member,
said convex member comprises a convex member body, and a convex portion, provided on a lateral wall of said convex member body; said convex member is adapted for contracting along the radial direction, as said convex portion is squeezed radially;
said female fastener comprises
a female fastener body,
an receiving cavity formed on said female fastener body, adapted for insertion of said convex member;
said receiving cavity comprises a first slot, adapted for axial insertion of said convex member body, and a second slot, adapted for axial insertion of said convex portion,
a locking slot is formed on an inner wall of said first slot, for preventing said convex portion from separating from said female fastener axially, and
a constraint guide slot is provided between said locking slot and said second slot,
said convex portion is adapted for move along said constraint guide slot and between said second slot and said locking slot in a reciprocating manner, as said convex member rotates relative to said receiving cavity in a reciprocating manner, and
said constraint guide slot has a shape that allows said convex member to be squeezed radially by said constraint guide slot, during the rotation process of said convex member from said second slot to said locking slot.

2. The fastener of claim 1, **characterized in that**,
said convex member body is an elastic circular column,
a third slot for dividing said circular column into at least two individual parts is provided on an end face of said circular column, and a bottom of said third slot extends towards a root portion of the convex member body on which said circular column is provided, an outer side wall of each said individual part is correspondingly provided with said convex portion;
the inner wall of said first slot is formed with a plurality of said locking slots at corresponding positions, with the number of said locking slots in consistence with that of said convex portion, and the rotation angle of each convex portion from said corresponding second slot to said corresponding locking slot is the same.

3. The fastener of claim 2, **characterized in that**,
each said individual part has one said convex portion provided on a lateral wall thereof, two said second slots are provided on corresponding positions of said receiving cavity and two said locking slot are provided on the corresponding position of the inner side wall of said first slot.

4. The fastener of claim 2, **characterized in that**,
two said convex portions are provided on the lateral walls of two said individual parts, and two said convex portions on the same individual part are aligned along the axial direction, two said second slots are provided on corresponding positions of said receiving cavity and two said convex portions on the same individual part are adapted for a coaxial insertion into the same said second slot, and said first slot has four said locking slots provided on corresponding positions of an inner side wall thereof.

5. The fastener of any one of claim 2-4, **characterized in that**,
the rotation angle of each convex portion from said corresponding second slot to said corresponding locking slot is 90°.

6. The fastener of any one of claim 1-5, **characterized in that**,
said convex portion is an arc projection, and the length of said arc projection extends along the circumferential direction of said convex member body.

7. The fastener of any one of claim 1-6, **characterized in that**,
as the constraint guide slot squeezes the convex portion radially through the lateral wall thereof, a sliding track is adapted to be formed on the lateral wall of the constraint guide slot, and the constraint guide slot has a shape that allows the distance from the sliding track to the rotation center gradually reduces along the direction from the end where the second slot is located to the end where the locking slot is located.

8. The fastener of any one of claim 1-7, **characterized in that**,
said male fastener further comprises
a male fastener body,
said convex member is provided on said male fastener body, and the shape of said male fastener body is the same as that of said female fastener body.

9. The fastener of any one of claim 1-8, **characterized in that**,
said male fastener and said female fastener respectively have a flexible connection member connected thereto.

10. The fastener of claim 9, **characterized in that**,
said flexible connection member is a rope or a chain.

11. A double end zipper, comprising,
a chain teeth, and
two sliding zipper heads coordinating with said chain teeth,
**characterized in** further comprising,
said fastener of claim 9 or 10,
said flexible connection member of said male fastener and said flexible connection member of said female fastener are respectively connected with two said sliding zipper heads.
